(19) Europäisches Patentamt
European Patent Office
Office européen des brevets

(11) **EP 4 459 612 A1**

(12) **EUROPEAN PATENT APPLICATION**
published in accordance with Art. 153(4) EPC

(43) Date of publication:
06.11.2024  Bulletin 2024/45

(51) International Patent Classification (IPC):
*G10K 11/178* (2006.01)    *B60R 11/02* (2006.01)

(21) Application number: 22913888.8

(52) Cooperative Patent Classification (CPC):
Y02T 90/00

(22) Date of filing: 18.11.2022

(86) International application number:
PCT/CN2022/132881

(87) International publication number:
WO 2023/124630 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  31.12.2021  CN 202111683326

(71) Applicant: Suzhou Rarevox Electronics Co., Ltd.
Suzhou, Jiangsu 215100 (CN)

(72) Inventors:
• MU, Yongsheng
  Suzhou, Jiangsu 215100 (CN)
• MA, Dengyong
  Suzhou, Jiangsu 215100 (CN)
• YE, Chao
  Suzhou, Jiangsu 215100 (CN)
• CAI, Yefeng
  Suzhou, Jiangsu 215100 (CN)

(74) Representative: De Vries & Metman
Overschiestraat 180
1062 XK Amsterdam (NL)

(54) **VEHICLE ROAD NOISE CONTROL METHOD AND SYSTEM BASED ON ACTIVE NOISE CANCELLATION, ELECTRONIC EQUIPMENT AND STORAGE MEDIUM**

(57)    Disclosed are a vehicle road noise control method and system based on active noise cancellation, electronic equipment, and a storage medium. The vehicle road noise control method comprises: collecting a multi-channel reference signal of vehicle road noise; generating a control signal according to a filter coefficient at current moment and the multi-channel reference signal, and feeding the control signal to a sound reproduction device of a vehicle; collecting sound signals at a plurality of sampling positions in a vehicle compartment to obtain a vector of an error signal; filtering the reference signal to obtain a filtered reference signal; writing the filtered reference signal into a matrix form; and updating the filter coefficient according to the matrix form of the filtered reference signal and the vector of the error signal. Active noise cancellation can be carried out on road noise caused by friction between vehicle tires and the road surface, noise pollution in the vehicle is reduced, and a relatively high convergence speed and a relatively excellent accuracy are achieved.

Acquiring reference signal for each sampling time
$x_k(n)$

Acquiring an error signal
$e_m(n)$

Generating an output signal, feeding to a loudspeaker
$$y_l(n) = \sum_{i=1}^{N} w_{k,l}(i) x_k(n-i)$$

Generating a filtered reference signal
$$\hat{x}_{k,l,m}(n) = \sum_{k=0}^{N} s_{l,m} x_k(n-k)$$

Reconstructing a signal matrix
$$\hat{X}(n) = \begin{bmatrix} \hat{x}(n) \\ \vdots \\ \hat{x}(n-N+1) \end{bmatrix} \in R^{K \cdot L \cdot N \times M}$$

Updating parameter
$$\boldsymbol{w}(n+1) = \boldsymbol{w}(n) + \mu \hat{X}(n)[\hat{X}(n)^T \hat{X}(n) + \delta I]^{-1} \boldsymbol{e}(n)$$

FIG. 1

EP 4 459 612 A1

**Description**

This application claims priority from Chinese Patent Application No. CN 2021116833265 filed on December 31th, 2021.

TECHNICAL FIELD

The present disclosure directs to field of vehicle noise control, and relates to a method and system for controlling vehicle road noise based on active noise reduction, an electronic device, and a storage medium.

BACKGROUND

As the development of modern industry, noise pollution issue is increasingly attracting people's attention, and high-intensity noise signals also affect the comfort of listeners. It is needed to increase volume to achieve a higher signal-to-noise ratio and a clear audio effect due to masking of the noise. A prolonged high sound pressure will cause an irreversible hearing damage. With the improvement of vehicle intelligence level, drivers and passengers have increasingly strict requirements for the acoustic environment inside the vehicle. The noise inside the vehicle may reduce the comfort of drivers and passengers, causing annoyance and fatigue among passengers inside the vehicle; it can also affect the clarity of communication and calls, and even affect the driver's perception of external signal sounds, increasing hidden troubles of traffic. Automotive NVH (Noise, Vibration, Harshness) is an important concern for vehicle manufacturers. The scheme such as reducing noise by modifying structural design, employing damping materials, or using devices such as shock-absorbing springs is collectively referred to as passive noise control, this method has a good noise reduction effect on medium and high-frequency noise. However, this method has a relatively poor effect on low frequencies, especially the road noise caused by collision and friction between the road surface and tires, which is concentrated in low frequencies in most cases. In addition, passive noise control requires a long adjusting time and is difficult to control costs. The active noise reduction solution utilizes the vehicle-mounted audio system to establish a reverse signal of the noise signal, and form a secondary sound wave to cancel out the noise in a target area, reduce noise pollution, and improve subjective listening comfort, and meanwhile it almost does not add extra weight to the vehicle, which helps to reduce exhaust emissions, and is a green and energy-saving solution.

FxLMS (Filtered-x Least Mean Square) algorithm is a commonly used algorithm in active noise control, which is widely used due to its low consumption of computing resources and good algorithm robustness. However, the FxLMS algorithm has a problem of slow convergence and is often uses as a single channel (SISO, Single Input Single Output) algorithm. The control of road noise requires multi-channel algorithms (MIMO, Multiple Inputs Multiple Outputs), however, in the multi-channel NFxLMS algorithms described in articles such as 'A Diffusion Strategy for the Multichannel Active Noise Control System in Distributed Network, Ju-man Song, 2016', and 'Multichannel Feedforward Active Noise Control System with Optimal Reference Microphone Selector Based on Time Difference of Arrival, Kenta Iwai, 2018', it is considered that the channels are orthogonal, and the influence of coupling terms is ignored, resulting in certain errors.

SUMMARY

An object of the present disclosure is to provide a method and system for controlling vehicle road noise based on active noise reduction, which can actively reduce the road noise caused by friction between vehicle tires and road surface, reduce interior noise pollution, and has a relatively fast convergence speed and relatively high accuracy.

Another object of the present disclosure is to provide an electronic device which can operate the vehicle road noise control method mentioned above.

Yet another object of the present disclosure is to provide a computer readable storage medium that stores a program capable of implementing the vehicle road noise control method mentioned above.

A first aspect of the present disclosure provides a method for controlling vehicle road noise based on active noise reduction, including the following steps:

S1, acquiring a multi-channel reference signal of vehicle road noise, denoted by $x_k(n)$, $k = 1,2, \cdots , K$, $K$ being a channel number of the reference signal, n representing a sampling time;

S2, generating a control signal based on a coefficient of a filter at a current time and the multi-channel reference signal, and feeding to a sound reproduction device of the vehicle;

S3, acquiring acoustical signals at a plurality of sampling positions inside a compartment of the vehicle to obtain a vector $e(n)$ of an error signal;

S4, filtering the reference signal to obtain a filtered reference signal $x_{k,l,m}(n)$, as shown in the following equation,

$$\widehat{x}_{k,l,m}(n) = \sum_{i=0}^{N-1} s_{l,m}(i) x_k(n-i),$$

$k = 1,2, \cdots, K; l = 1,2, \cdots, L; m = 1,2, \cdots, M$

wherein, $N$ is a length of the filter, $L$ is a channel number of the sound reproduction unit, $M$ is a number of the sampling positions, $s_{l,m}$ represents a transfer function from the $l$-th loudspeaker to the m-th sampling position, and is a finite length filter with an order of $N$, $s_{l,m}(i)$ is the $i$-th coefficient of the filter; $x_k(n-i)$ represents the $k$-th channel of reference signal at previous $i$ sampling times;

S5, writing the filtered reference signal in a matrix form as shown below,

$$\widehat{x}(n) = \begin{bmatrix} \widehat{x}_{1,1,1}(n) & \cdots & \widehat{x}_{1,1,M}(n) \\ \vdots & \ddots & \vdots \\ \widehat{x}_{K,L,1}(n) & \cdots & \widehat{x}_{K,L,M}(n) \end{bmatrix} \in R^{K \cdot L \times M}$$

$$\widehat{X}(n) = \begin{bmatrix} \widehat{x}(n) \\ \vdots \\ \widehat{x}(n-N+1) \end{bmatrix} \in R^{K \cdot L \cdot N \times M}$$

wherein, $\hat{x}(n)$ represents a matrix with a size of $K \cdot L$ rows and $M$ columns, of which elements are composed of the filtered reference signal $x_{k,l,m}(n)$ at the current sampling time; $\hat{X}(n)$ represents a matrix with a size of $K \cdot L \cdot N$ rows and $M$ columns, of which elements are composed of the filtered reference signals at the current sampling time and the previous sampling times, $\hat{x}(n-N+1)$ represents a matrix with a size of $K \cdot L$ rows and $M$ columns, of which elements are composed of the filtered reference signal $x_{k,l,m}(n-N+1)$ at the previous $(N-1)$-th time, $\in R^{K \cdot L \times M}$ represents a matrix with $K \blacksquare L$ rows and $M$ columns, $\in R^{K \cdot L \cdot N \times M}$ represents a matrix with $K \cdot L \cdot N$ rows and $M$ columns;

S6, updating the coefficient of the filter in step S2 according to the following equation,

$$w(n+1) = w(n) + \mu \widehat{X}(n) \left[ \widehat{X}(n)^T \widehat{X}(n) + \delta I \right]^{-1} e(n)$$

wherein, w(n + 1) represents an updated coefficient of the filter, w(n) represents a coefficient of the filter at the current time, $\mu$ is a convergence factor, $\delta$ is a regularization factor, and I is an identity matrix.

Herein, the reference signal in practical physics refers to the vibration or noise signal caused by the friction between the wheels and the road surface at the suspension and bodywork of the vehicle; the control signal can be amplified by a power amplifier and sent to a sound reproduction device (such as a voice coil of a loudspeaker) for electroacoustic conversion, to form the secondary sound wave for noise cancellation; $e(n)$ represents an error signal in the sense of signal processing, and is actually and physically the signal collected by a sound acquisition device (for example, a microphone) in the area to be denoised inside the compartment.

The "length of a filter" refers to the order of the filter, herein refers to the number of zeros of the filter; the higher the order is, the higher the frequency resolution of the filter is, the higher the accuracy is, and the better the effectiveness. is

In an embodiment, a matrix form of the coefficient of the filter $w(n)$ is:

$$w(n) = \left[ \left[ w_{1,1}(0), \cdots, w_{J,K}(0) \right] \cdots \left[ w_{1,1}(N-1), \cdots, w_{J,K}(N-1) \right] \right]^T \in R^{K \cdot L \cdot N \times 1}$$

wherein, $\in R^{K \cdot L \cdot N \times 1}$ represents a matrix with $K \cdot L \cdot N$ rows and 1 column;

in step S2, the control signal is represented as the following equation:

$$y_l(n) = \sum_{i=0}^{N-1} w_{k,l}(i) x_k(n-i),$$

$l = 1,2, \cdots, L ; k = 1,2, \cdots, K$

wherein, $w_{k,l}(i)$ is an element in the matrix $\boldsymbol{w}(n)$, specifically represents an i-th order coefficient of the filter with an input being the $k$-th reference signal and an output being the $l$-th sound reproduction device, $K \cdot L$ such filters are provided, with an order of $N$, each order $i$ of the $K \cdot L$ filters is combined into an array form $[w_{1,1}(i), \cdots, w_{J,K}(i)]$, all order coefficients together form $\boldsymbol{w}(n)$.

In an embodiment, in step S1, a vibration signal caused by the friction between wheels and a road surface is acquired through a vibrating sensor and is as the reference signal.

In an embodiment, the vibrating sensor is arranged on a bottom plate of the vehicle.

In an embodiment, in step S1, a noise signal caused by a friction between the wheels and the road surface is acquired through a first microphone and is as the reference signal.

In an embodiment, the first microphone is arranged at a position adjacent to the wheels of the vehicle.

In an embodiment, in step S2, the sound reproduction device comprises a vehicle-mounted loudspeaker arranged inside the compartment of the vehicle. The vehicle-mounted loudspeaker is arranged inside the compartment of the vehicle or to emit sound at least to the compartment of the vehicle, and includes but is not limited to: headrest loudspeakers, roof loudspeakers, door panel loudspeakers, etc..

In an embodiment, in step S3, acoustical signals inside the compartment of the vehicle are acquired through a plurality of second microphones, and the plurality of second microphones is arranged at a plurality of sampling positions inside the compartment of the vehicle.

A second aspect of the present disclosure provides a vehicle road noise control system based on active noise reduction, which includes:

a road noise acquisition device for acquiring a noise or vibration signal caused by the friction between the wheels and the road surface;

a control device for generating a multi-channel reference signal based on the noise or vibration signal acquired by the road noise acquisition device, and generating a control signal based on a coefficient of a filter at the current time and the multi-channel reference signal;

a sound reproduction device for generating a secondary sound wave for canceling noise in the compartment based on the control signal sent by the control device; and

an error signal acquisition device for acquiring acoustical signals at a plurality of positions of the compartment to obtain a vector $\boldsymbol{e}(n)$ of an error signal;

wherein, the control device is further configured to filter the reference signal and write it into a matrix form, and to update the coefficient of the filter based on the matrix form of the filtered reference signal and the vector of the error signal according to the following equation,

$$w(n+1) = w(n) + \mu\hat{X}(n)\left[\hat{X}(n)^T\hat{X}(n) + \delta I\right]^{-1}e(n)$$

wherein, w(n + 1) represents an updated coefficient of the filter, w(n) represents a coefficient of the filter at the current time, $\mu$ is a convergence factor, $\hat{X}(n)$ is the matrix form of the filtered reference signal, $\delta$ is a regularization factor, and I is an identity matrix.

In an embodiment, the reference signal is filtered to obtain a filtered reference signal $\hat{x}_{k,l,m}(n)$, as shown in the following equation,

$$\widehat{x}_{k,l,m}(n) = \sum_{i=0}^{N-1} s_{l,m}(i) x_k(n-i),$$

$k = 1,2, \cdots, K ; l = 1,2, \cdots, L ; m = 1,2, \cdots, M$

wherein, $N$ is the length of the filter, $L$ is the channel number of the sound reproduction unit, $M$ is the number of the sampling positions, $s_{l,m}$ represents the transfer function from the $l$-th loudspeaker to the $m$-th sampling position, and is a finite length filter with an order of $N$, $s_{l,m}(i)$ is the $i$-th coefficient of the filter; $x_k(n\text{-}i)$ represents the $k$-th channel of reference signal at the previous $i$ sampling times;

E, the filtered reference signal is written in a matrix form as shown below,

$$\widehat{\boldsymbol{x}}(n) = \begin{bmatrix} \widehat{x}_{1,1,1}(n) & \cdots & \widehat{x}_{1,1,M}(n) \\ \vdots & \ddots & \vdots \\ \widehat{x}_{K,L,1}(n) & \cdots & \widehat{x}_{K,L,M}(n) \end{bmatrix} \in R^{K \cdot L \times M}$$

$$\widehat{\boldsymbol{X}}(n) = \begin{bmatrix} \widehat{\boldsymbol{x}}(n) \\ \vdots \\ \widehat{\boldsymbol{x}}(n-N+1) \end{bmatrix} \in R^{K \cdot L \cdot N \times M}$$

wherein, $\hat{x}(n)$ represents a matrix with a size of $K \cdot L$ rows and $M$ columns, of which elements are composed of the filtered reference signal $\hat{x}_{k,l,m}(n)$ at the current sampling time; $\hat{X}(n)$ represents a matrix with a size of $K \cdot L \cdot N$ rows and $M$ columns, of which elements are composed of the filtered reference signals at the current sampling time and the historical sampling times, $\hat{x}(n\text{-}N+1)$ represents a matrix with a size of $K \cdot L$ rows and $M$ columns, of which elements are composed of the filtered reference signal $\hat{x}_{k,l,m}(n\text{-}N+1)$ at the previous $(N\text{-}1)$-th time, $\in R^{K \cdot L \times M}$ represents a matrix with $K \blacksquare L$ rows and $M$ columns, E $R^{K \cdot L \cdot N \times M}$ represents a matrix with $K \cdot L \cdot N$ rows and $M$ columns.

In an embodiment, the matrix form of the coefficient of the filter $w(n)$ is:

$$\boldsymbol{w}(n) = \left[ \left[ w_{1,1}(0), \cdots, w_{J,K}(0) \right] \cdots \left[ w_{1,1}(N-1), \cdots, w_{J,K}(N-1) \right] \right]^T \in R^{K \cdot L \cdot N \times 1}$$

wherein, $\in R^{K \cdot L \cdot N \times 1}$ represents a matrix with $K \cdot L \cdot N$ rows and 1 column;

In step S2, the control signal is represented as the following equation:

$$y_l(n) = \sum_{i=0}^{N-1} w_{k,l}(i) x_k(n-i),$$

$l = 1,2,\cdots, L$ ; $k = 1,2,\cdots, K$

wherein, $w_{k,l}(i)$ is an element in the matrix $w(n)$, specifically represents the $i$-th order coefficient of the filter with an input being the $k$-th reference signal and an output being the $l$-th sound reproduction device. $K \cdot L$ such filters are provided, with an order of $N$; each order $i$ of the $K \cdot L$ filters is combined into an array form $[w_{1,1}(i), \cdots, w_{J,K}(i)]$; all order coefficients together form $w(n)$.

In an embodiment, the road noise acquisition device is a vibrating sensor arranged on the bottom plate of the vehicle or a first microphone arranged at a position adjacent to the wheels of the vehicle.

In an embodiment, the error signal acquisition device comprises a plurality of second microphones arranged at a plurality of sampling positions inside the compartment of the vehicle.

In an embodiment, the sound reproduction device comprises a vehicle-mounted loudspeaker. The vehicle-mounted loudspeaker is arranged inside the compartment of the vehicle or to emit sound at least to the compartment of the vehicle, and includes but is not limited to: headrest loudspeakers, roof loudspeakers, door panel loudspeakers, etc..

A third purpose of the present disclosure is to provide an electronic device, which comprises a memory, a processor, and a computer program stored in the memory and capable of running on the processor, wherein the processor is configured to implement the vehicle road noise control method as described above when executing the program.

In an embodiment, the electronic device is a vehicle-mounted audio system.

A fourth purpose of the present disclosure is to provide a computer readable storage medium that stores a computer program, the program, when be executed by a processor, implements the above-mentioned vehicle road noise control method.

The present disclosure adopts the above solutions, and has the following advantages over conventional art: The vehicle road noise control method and system of the present disclosure, is directed at the road noise caused by the friction between the tires and the road surface, adopts the improved multi-channel normalized FxLMS algorithm to normalize the convergence factor, which converges faster than the traditional FxLMS algorithms; the normalized calculation considers the coupling between channels, which is more accurate and converges faster than existing multi-channel NFxLMS algorithms.

BRIEF DESCRIPTION OF THE DRAWINGS

For more clearly explaining the technical solutions in the embodiments of the present disclosure, the accompanying drawings used to describe the embodiments are simply introduced in the following. Apparently, the below described drawings merely show a part of the embodiments of the present disclosure, and those skilled in the art can obtain other drawings according to the accompanying drawings without creative work.

Figure 1 is a flow chart of an MIMO MNFxLMS algorithm according to an embodiment of the present disclosure.
FIG. 2 is a block diagram of the MIMO MNFxLMS algorithm according to an embodiment of the present disclosure.
FIG. 3 is a block diagram of a vehicle road noise control system according to an embodiment of the present disclosure.
FIG. 4 is a comparison chart of the convergence performance of three algorithms, namely MIMO FxLMS, MIMO NFxLMS, and MIMO MNFxLMS algorithms at Position 1.
FIG. 5 is a comparison chart of the convergence performance of three algorithms, namely MIMO FxLMS, MIMO NFxLMS, and MIMO MNFxLMS algorithms at Position 2.

DETAILED DESCRIPTION

In the following, the preferable embodiments of the present disclosure are explained in detail combining with the accompanying drawings so that the advantages and features of the present disclosure can be easily understood by the skilled persons in the art. It should be noted that the explanation on these implementations is to help understanding of the present disclosure, and is not intended to limit the present disclosure.

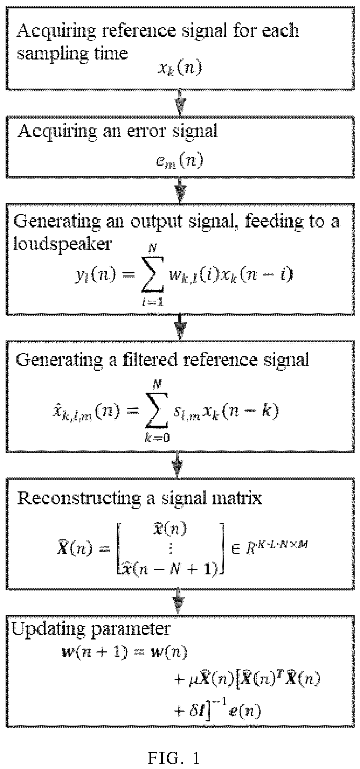

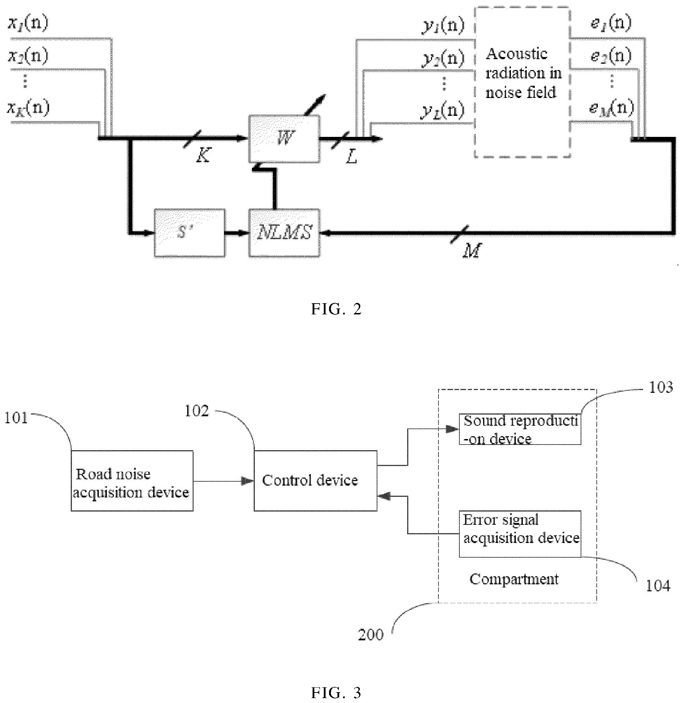

This embodiment provides an active noised reduction-based vehicle road noise control method, which adopts an improved multi-channel normalized FxLMS (referred to as MIMO MNFxLMS, Multiple Inputs Multiple Outputs Modified Normalized Filtered-x Least Mean Square) algorithm to actively reduce the road noise caused by friction between vehicle tires and the road surface. Combining with FIG. 1 and FIG. 2, this method is specifically described as below.

(1) Acquisition of a reference signal

At each sampling time n , reference signals are acquired from sensors, for example vibration signals are acquired by a vibration sensor (typically, arranged on the bottom plate of the vehicle), or sound signals are acquired by a microphone (typically, arranged on a position near the wheels of the vehicle). There are K-channel reference signals, denotes as $x_k(n)$, $k = 1, 2, \cdots, K$.

(2) Generation of a control signal

A control signal $y_l(n)$ is generated based on a parameter $w_{k,l}(n)$ at the current time and the reference signal obtained at the previous step, and is fed to the sound reproduction device, specifically in this embodiment, the sound reproduction device comprises a vehicle-mounted loudspeaker.

$$y_l(n) = \sum_{i=0}^{N-1} w_{k,l}(i) x_k(n-i),$$

$l = 1, 2, \cdots, L ; k = 1, 2, \cdots, K$

Wherein, the number of the channels of the loudspeaker is $L$, and the order of the adaptive filter is $N$. $w_{k,l}(i)$ represents that the input of the filter is the $k$-th reference signal, and the output is the $l$-th control sound source, namely the loudspeaker here.

(3) Generation of a filtered reference signal

An important step in the FxLMS algorithm is to filter the reference signals. It is generally believed that the transfer function of the secondary channel comprises a transmission path of the digital control signal $y(n)$ through a DAC module, an analog filter, a power amplifier module, a loudspeaker, a spatial propagation of sound waves, a microphone, an analog filter, and an ADC module. The transfer function $S$ of the secondary channel is obtained through online or offline system identification methods, expressed as $S'$, which is a digital filter of length $N$, represented as $s_{l,m}, l = 1,2, \cdots, L ; m = 1,2, \cdots, M,$ represents the transfer function between the $l$-th loudspeaker to the $m$-th microphone. $M$ is the number of microphones. The filtered reference signal obtained through calculation is:

$$\widehat{x}_{k,l,m}(n) = \sum_{i=0}^{N-1} s_{l,m}(i) x_k(n-i),$$

$k = 1,2, \cdots, K ; l = 1,2, \cdots, L ; m = 1,2, \cdots, M$

(4) The filtered reference signal is written into matrix form

$$\widehat{x}(n) = \begin{bmatrix} \widehat{x}_{1,1,1}(n) & \cdots & \widehat{x}_{1,1,M}(n) \\ \vdots & \ddots & \vdots \\ \widehat{x}_{K,L,1}(n) & \cdots & \widehat{x}_{K,L,M}(n) \end{bmatrix} \in R^{K \cdot L \times M}$$

$$\widehat{X}(n) = \begin{bmatrix} \widehat{x}(n) \\ \vdots \\ \widehat{x}(n-N+1) \end{bmatrix} \in R^{K \cdot L \cdot N \times M}$$

where, $\in R^{K \cdot L \times M}$ represents a matrix with $K ∎ L$ rows and $M$ columns, $\in R^{K \cdot L \cdot N \times M}$ represents a matrix with $K \cdot L \cdot N$ rows and $M$ columns.

(5) According to error signals $e_m(n)$ acquired from each microphone, obtain the vector of the error signal, represented as

$$e(n) = [e_1(n), \cdots, e_M(n)]^T \in R^{M \times 1}$$

wherein, there are $M$ microphone signals.

(6) The parameter w(n) of the control filter is updated, which is represented as

$$w(n+1) = w(n) + \mu \widehat{X}(n) \left[ \widehat{X}(n)^T \widehat{X}(n) + \delta I \right]^{-1} e(n)$$

Wherein, $\delta$ is the regularization factor, usually taken to one decimal place based on experience. I is an identity matrix. $\mu$ is a convergence factor, generally selected a number based on experience, and its value range is usually between 0 and 2. Wherein, the matrix form of $w(n)$ is

$$w(n) = \left[ \left[ w_{1,1}(0), \cdots, w_{J,K}(0) \right] \cdots \left[ w_{1,1}(N-1), \cdots, w_{J,K}(N-1) \right] \right]^T \in R^{K \cdot L \cdot N \times 1}$$

wherein, the definition of $w_{k,l}(i)$ is explained in step (2).

Referring to FIG. 3, the vehicle road noise control system according to this embodiment comprises:

a road noise acquisition device 101, for acquiring a noise or vibration signal caused by the friction between the wheels and the road surface;

a control device 102, for generating a multi-channel reference signal based on the noise or vibration signal acquired by the road noise acquisition device 101, and for generating a control signal based on a coefficient of a filter at the current time and the multi-channel reference signal;

a sound reproduction device 103, for generating a secondary sound wave for canceling noise in the compartment 200 based on the control signal sent by the control device 102; and

an error signal acquisition device 104, for acquiring acoustical signals at a plurality of positions of the compartment 200 to obtain a vector $e(n)$ of an error signal;

wherein, the control device 102 is further configured to filter the reference signal and write it into a matrix form, and to update the coefficient of the filter based on the matrix form of the filtered reference signal and the vector of the error signal according to the following equation,

$$w(n+1) = w(n) + \mu \hat{X}(n) \left[ \hat{X}(n)^T \hat{X}(n) + \delta I \right]^{-1} e(n)$$

wherein, w(n + 1) represents the updated coefficient of the filter, w(n) represents the coefficient of the filter at the current time, $\mu$ is the convergence factor, $\hat{X}(n)$ is the matrix form of the filtered reference signal, $\delta$ is the regularization factor, and I is an identity matrix.

The road noise acquisition device 101 is electrically connected to an input end of the control device 102, and specifically comprises a vibrating sensor arranged on the bottom plate of the vehicle or a first microphone arranged at a position near the wheels of the vehicle. The error signal acquisition device 104 is electrically connected to an input end of the control device 102, and specifically comprises a plurality of second microphones arranged at a plurality of sampling positions inside the compartment 200. The sound reproduction device 103 is electrically connected to an output end of the control device 102, and specifically comprises a vehicle-mounted loudspeaker, which is arranged inside the compartment 200 of the vehicle or to emit sound at least to the compartment of the vehicle, and includes but is not limited to: headrest loudspeakers, roof loudspeakers, door panel loudspeakers, etc..

Simulation example

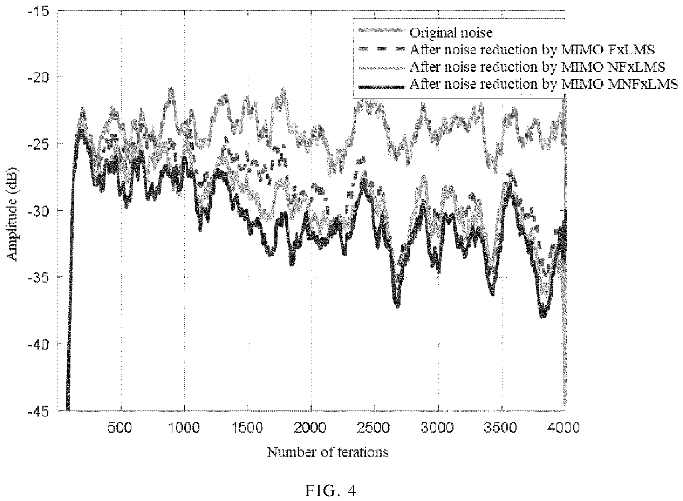

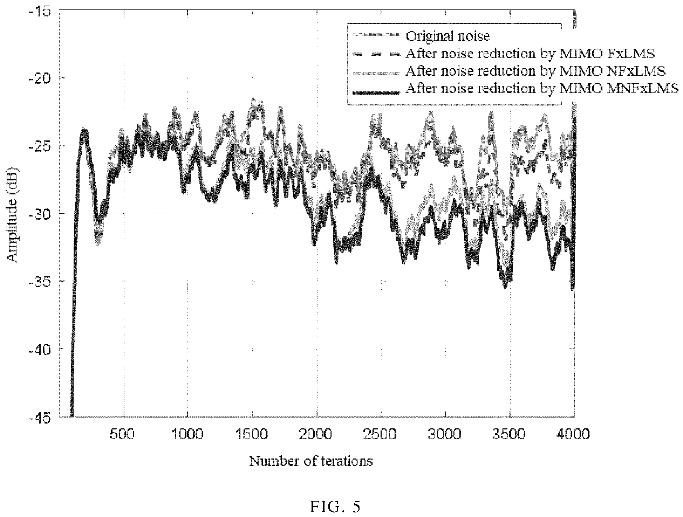

The convergence performance of the algorithm was simulated. In the simulation experiment, the target noise was a broadband signal with a frequency band covering 80 Hz - 320 Hz, which is a typical frequency band distribution of road noise. The noise signal was a white noise signal generated through a bandpass filter. The number of channels of the reference signal was set as $K$=2, the number of loudspeakers was set as $L$=5, and the number of microphones for acquiring error signals was set as $M$=5. The transfer functions between the loudspeakers and microphones, also are the transfer functions of the secondary channels mentioned above, were obtained through real vehicle acquisition. In the simulation experiment, the variation relationships of noise energy with iteration times (corresponding to time) before and after active noise control were respectively compared, and more importantly, the traditional multi-channel FxLMS algorithm (MIMO FxLMS), the existing multi-channel normalized FxlMS algorithm (MIMO NFxLMS), and the improved normalized FxLMS algorithm (MIMO MNFxLMS) proposed in the present disclosure were compared. FIG. 4 shows the variation relationships of the residual noise signal amplitudes with iterations at the first position, and it can be seen from FIG. 4 that the traditional FxLMS algorithm has a certain denoising effect; after adopting normalization, the algorithm converges faster; using the improved normalization algorithm of the present disclosure achieves faster convergence results. FIG. 5 shows the variation relationships of the residual noise signal amplitudes with iterations at the fifth position, and it can be seen from FIG. 5 that the traditional FxLMS algorithm has almost no denoising effect; after adopting normalization processing, there is a significant noise reduction effect, and if adopting the improved normalization algorithm of the present disclosure, which considers the coupling effect between channels, faster convergence speed and larger noise reduction can be achieved.

Those skilled in the art can understand that unless specifically stated, the singular forms "a", "an", "said", and "the" used herein may also include the plural form. It should be further understood that wording "comprises" used in the description of this application refers to the presence of a feature, an integer, a step, an operation, an element and/or an assembly, but does not exclude the presence or addition of one or more other features, integers, steps, operations, elements, assemblies and/or combinations thereof.

It should be further understood that in the present disclosure, "plurality" refers to two or more, and other quantifiers are similar. "And/or" describes the association relationship of the associated objects, indicating that there can be three types of relationships, for example, A and/or B, which can represent: the existence of A alone, the coexistence of A and B, and the existence of B alone. The character "/" generally indicates that the objects associated before and after are in an "or" relationship. The singular forms "a", "said", and "the" are intended to include the plural forms as well, unless the context clearly dictates otherwise.

It can be further understood that the terms "first", "second", etc. are used to describe various information, but this information should not be limited to these terms. These terms are only used to distinguish the same type of information from each other and do not indicate a specific order or degree of importance. In fact, expressions such as "first" and "second" can be used interchangeably. For example, without departing from the scope of the present disclosure, the first information can also be referred to as the second information, and similarly, the second information can also be referred to as the first information.

The embodiments described above are only for illustrating the technical concepts and features of the present disclosure, are preferred embodiments, and are intended to make those skilled in the art being able to understand the present disclosure and thereby implement it, and should not be concluded to limit the protective scope of this disclosure. Any equivalent variations or modifications according to the spirit of the present disclosure should be covered by the protective scope of the present disclosure.

**Claims**

1. A method for controlling vehicle road noise based on active noise reduction, comprising the following steps:

S1, acquiring a multi-channel reference signal of vehicle road noise, denoted by $x_k(n)$, $k = 1,2, \cdots, K$, $K$ being a channel number of the reference signal, n representing a sampling time;

S2, generating a control signal based on a coefficient of a filter at a current time and the multi-channel reference signal, and feeding to a sound reproduction device of the vehicle;

**characterized in that,** the method for controlling vehicle road noise further comprises the following steps:

S3, acquiring acoustical signals at a plurality of sampling positions inside a compartment of the vehicle to obtain a vector $\boldsymbol{e}(n)$ of an error signal;

S4, filtering the reference signal to obtain a filtered reference signal $x_{k,l,m}(n)$, as shown in the following equation,

$$\widehat{x}_{k,l,m}(n) = \sum_{i=0}^{N-1} s_{l,m}(i)\, x_k(n-i),$$

$k = 1,2, \cdots, K$ ; $l = 1,2, \cdots, L$ ; $m = 1,2,...,M$

wherein, $N$ is a length of the filter, $L$ is a channel number of the sound reproduction unit, $M$ is a number of the sampling positions, $s_{l,m}$ represents a transfer function from a $l$-th loudspeaker to a $m$-th sampling position, $s_{l,m}(i)$ is an $i$-th coefficient of the filter; $x_k(n-i)$ represents a $k$-th channel of reference signal at previous $i$ sampling times;

S4, writing the filtered reference signal in a matrix form as shown below,

$$\widehat{x}(n) = \begin{bmatrix} \widehat{x}_{1,1,1}(n) & \cdots & \widehat{x}_{1,1,M}(n) \\ \vdots & \ddots & \vdots \\ \widehat{x}_{K,L,1}(n) & \cdots & \widehat{x}_{K,L,M}(n) \end{bmatrix} \in R^{K \cdot L \times M}$$

$$\widehat{X}(n) = \begin{bmatrix} \widehat{x}(n) \\ \vdots \\ \widehat{x}(n-N+1) \end{bmatrix} \in R^{K \cdot L \cdot N \times M}$$

wherein, $\hat{x}(n)$ represents a matrix with a size of $K \cdot L$ rows and $M$ columns, of which elements are composed of the filtered reference signal $\hat{x}_{k,l,m}(n)$ at the current sampling time; $\hat{X}(n)$ represents a matrix with a size of $K \cdot L \cdot N$ rows and $M$ columns, of which elements are composed of the filtered reference signals at the current sampling time and previous sampling times, $\hat{x}(n-N+1)$ represents a matrix with a size of $K \cdot L$ rows and $M$ columns, of which elements are composed of the filtered reference signal $x_{k,l,m}(n-N+1)$ at previous $(N-1)$-th time, $\in R^{K \cdot L \times M}$ represents a matrix with $K$ ▪ $L$ rows and $M$ columns, $\in R^{K \cdot L \cdot N \times M}$ represents a matrix with $K \cdot L \cdot N$ rows and $M$ columns;

S6, updating the coefficient of the filter in step S2 according to the following equation,

$$w(n+1) = w(n) + \mu \widehat{X}(n)\left[\widehat{X}(n)^T \widehat{X}(n) + \delta I\right]^{-1} e(n)$$

wherein, w(n + 1) represents an updated coefficient of the filter, which is used to generate an output control signal by filtering at next sampling time n + 1, w(n) represents a coefficient of the filter at the current time, $\mu$ is a convergence factor, $\delta$ is a regularization factor, and I is an identity matrix.

2. The method for controlling vehicle road noise as claimed in claim 1, **characterized in that,** a matrix form of the coefficient of the filter $w(n)$ is:

$$w(n) = \left[\left[w_{1,1}(0), \cdots, w_{J,K}(0)\right] \cdots \left[w_{1,1}(N-1), \cdots, w_{J,K}(N-1)\right]\right]^T \in R^{K \cdot L \cdot N \times 1}$$

wherein, $\in R^{K \cdot L \cdot N \times 1}$ represents a matrix with $K \cdot L \cdot N$ rows and 1 column; in step S2, the control signal is represented as the following equation:

$$y_l(n) = \sum_{i=0}^{N-1} w_{k,l}(i) x_k(n-i),$$

$l = 1, 2, \cdots, L$ ; $k = 1, 2, \cdots, K$

wherein, $w_{k,l}(i)$ is an element in the matrix $w(n)$, specifically represents an $i$-th order coefficient of the filter with an input being a $k$-th reference signal and an output being a $l$-th sound reproduction device, $K \cdot L$ filters are provided, with an order of $N$, each order $i$ of the $K \cdot L$ filters is combined into an array form $[w_{1,1}(i), \cdots, w_{J,K}(i)]$, all order coefficients together form $w(n)$.

3. The method for controlling vehicle road noise as claimed in claim 1, **characterized in that,** in step S1, a vibration signal caused by a friction between wheels and a road surface is acquired through a vibrating sensor and is as the reference signal.

4. The method for controlling vehicle road noise as claimed in claim 3, **characterized in that,** the vibrating sensor is arranged on a bottom plate of the vehicle.

5. The method for controlling vehicle road noise as claimed in claim 1, **characterized in that,** in step S1, a noise signal caused by a friction between wheels and a road surface is acquired through a first microphone and is as the reference signal.

6. The method for controlling vehicle road noise as claimed in claim 5, **characterized in that,** the first microphone is arranged at a position adjacent to the wheels of the vehicle.

7.  The method for controlling vehicle road noise as claimed in claim 1, **characterized in that,** in step S2, the sound reproduction device comprises a vehicle-mounted loudspeaker arranged inside the compartment of the vehicle.

8.  The method for controlling vehicle road noise as claimed in claim 1, **characterized in that,** in step S3, acoustical signals inside the compartment of the vehicle are acquired through a plurality of second microphones, and the plurality of second microphones is arranged at a plurality of sampling positions inside the compartment of the vehicle.

9.  A system for controlling vehicle road noise based on active noise reduction, **characterized in that,** it comprises:

    a road noise acquisition device for acquiring a noise or vibration signal caused by friction between wheels and a road surface;
    a control device for generating a multi-channel reference signal based on the noise or vibration signal acquired by the road noise acquisition device, and generating a control signal based on a coefficient of a filter at a current time and the multi-channel reference signal;
    a sound reproduction device for generating a secondary sound wave for canceling noise in a compartment based on the control signal sent by the control device; and
    an error signal acquisition device for acquiring acoustical signals at a plurality of positions of the compartment to obtain a vector e(n) of an error signal;
    wherein, the control device is further configured to filter the reference signal and write it into a matrix form, and to update the coefficient of the filter based on the matrix form of the filtered reference signal and the vector of the error signal according to the following equation,

$$w(n + 1) = w(n) + \mu \widehat{X}(n)\left[\widehat{X}(n)^T \widehat{X}(n) + \delta I\right]^{-1} e(n)$$

    wherein, w(n + 1) represents an updated coefficient of the filter, w(n) represents a coefficient of the filter at the current time, $\mu$ is a convergence factor, $\widehat{X}(n)$ is the matrix form of the filtered reference signal, $\delta$ is a regularization factor, and I is an identity matrix.

10. The vehicle road noise control system as claimed in claim 9, **characterized in that,** the road noise acquisition device comprises a vibrating sensor arranged on a bottom plate of the vehicle or a first microphone arranged at a position adjacent to a wheel of the vehicle; the error signal acquisition device comprises a plurality of second microphones arranged at a plurality of sampling positions inside the compartment of the vehicle.

11. The vehicle road noise control system as claimed in claim 9, **characterized in that,** the sound reproduction device comprises a vehicle-mounted loudspeaker arranged inside the compartment of the vehicle.

12. The vehicle road noise control system as claimed in claim 9, **characterized in that,** the control device is configured to:

    filter the reference signal to obtain a filtered reference signal $\hat{x}_{k,l,m}(n)$, as shown in the following equation,

$$\widehat{x}_{k,l,m}(n) = \sum_{i=0}^{N-1} s_{l,m}(i) x_k(n-i),$$

    $k = 1,2,\cdots,K; l = 1,2,\cdots,L; m = 1,2,\cdots,M$
    wherein, $N$ is a length of the filter, $L$ is a channel number of the sound reproduction unit, $M$ is a number of the sampling positions, $s_{l,m}$ represents a transfer function from a $l$-th loudspeaker to a $m$-th sampling position, $s_{l,m}(i)$ is an $i$-th coefficient of the filter; $x_k(n-i)$ represents a $k$-th channel of reference signal at previous $i$ sampling times; and
    write the filtered reference signal in a matrix form as shown below,

$$\widehat{\boldsymbol{x}}\,(n) = \begin{bmatrix} \widehat{x}_{1,1,1}(n) & \cdots & \widehat{x}_{1,1,M}(n) \\ \vdots & \ddots & \vdots \\ \widehat{x}_{K,L,1}(n) & \cdots & \widehat{x}_{K,L,M}(n) \end{bmatrix} \in R^{K \cdot L \times M}$$

$$\widehat{X}(n) = \begin{bmatrix} \widehat{\boldsymbol{x}}\,(n) \\ \vdots \\ \widehat{\boldsymbol{x}}\,(n - N + 1) \end{bmatrix} \in R^{K \cdot L \cdot N \times M}$$

wherein, $\hat{\boldsymbol{x}}(n)$ represents a matrix with a size of $K \cdot L$ rows and $M$ columns, of which elements are composed of the filtered reference signal $\hat{x}_{k,l,m}(n)$ at the current sampling time; $\hat{\boldsymbol{X}}(n)$ represents a matrix with a size of $K \cdot L \cdot N$ rows and $M$ columns, of which elements are composed of the filtered reference signals at the current sampling time and the historical sampling times, $\hat{x}(n - N + 1)$ represents a matrix with a size of $K \cdot L$ rows and $M$ columns, of which elements are composed of the filtered reference signal $\hat{x}_{k,l,m}(n - N + 1)$ at previous $(N - 1)$-th time, $E\ R^{K \cdot L \times M}$ represents a matrix with $K \blacksquare L$ rows and $M$ columns, $E\ R^{K \cdot L \cdot N \times M}$ represents a matrix with $K \cdot L \cdot N$ rows and $M$ columns.

13. The vehicle road noise control system as claimed in claim 9, **characterized in that,** the control signal is represented as the following equation:

$$y_l\,(n) = \sum_{i=0}^{N-1} w_{k,l}\,(i)\,x_k\,(n - i),$$

$l = 1,2, \cdots, L$ ; $k = 1,2, \cdots, K$

wherein, $w_{k,l}(i)$ is an element in the matrix $\boldsymbol{w}(n)$, specifically represents an $i$-th order coefficient of the filter with an input being a $k$-th reference signal and an output being a $l$-th sound reproduction device. $K \cdot L$ filters are provided, with an order of $N$, each order $i$ of the $K \cdot L$ filters is combined into an array form $[w_{1,1}(i), \cdots, w_{J,K}(i)]$, all order coefficients together form $\boldsymbol{w}(n)$.

14. An electronic device, comprising a memory, a processor, and a computer program stored in the memory and capable of running on the processor, **characterized in that,** the processor is configured to implement the vehicle road noise control method as claimed in any one of claims 1 to 8 when executing the program.

15. A computer readable storage medium, **characterized in that,** the computer readable storage medium stores a computer program, the program, when be executed by a processor, implements the vehicle road noise control method as claimed in any one of claims 1 to 8.

Acquiring reference signal for each sampling time $x_k(n)$

Acquiring an error signal $e_m(n)$

Generating an output signal, feeding to a loudspeaker
$$y_l(n) = \sum_{i=1}^{N} w_{k,l}(i) x_k(n-i)$$

Generating a filtered reference signal
$$\hat{x}_{k,l,m}(n) = \sum_{k=0}^{N} s_{l,m} x_k(n-k)$$

Reconstructing a signal matrix
$$\hat{X}(n) = \begin{bmatrix} \hat{x}(n) \\ \vdots \\ \hat{x}(n-N+1) \end{bmatrix} \in R^{K \cdot L \cdot N \times M}$$

Updating parameter
$$w(n+1) = w(n) + \mu \hat{X}(n) \left[ \hat{X}(n)^T \hat{X}(n) + \delta I \right]^{-1} e(n)$$

FIG. 1

FIG. 2

FIG. 3

FIG. 4

FIG. 5

## INTERNATIONAL SEARCH REPORT

| International application No. |
|---|
| **PCT/CN2022/132881** |

**A.    CLASSIFICATION OF SUBJECT MATTER**

G10K 11/178(2006.01)i;   B60R 11/02(2006.01)i

According to International Patent Classification (IPC) or to both national classification and IPC

**B.    FIELDS SEARCHED**

Minimum documentation searched (classification system followed by classification symbols)

G10K11;B60R11

Documentation searched other than minimum documentation to the extent that such documents are included in the fields searched

Electronic data base consulted during the international search (name of data base and, where practicable, search terms used)

CNPAT, CNKI, WPI, EPODOC: 滤波器, 系数, 参数, 误差, 向量, 路面, 路噪, 主动降噪, 参考信号, 车辆, 车厢, 传递函数, 矩阵, 次级, filter, coefficient, parameter, error, vector, road surface, road noise, active noise reduction, reference signal, vehicle, cabin, transfer function, matrix, secondary.

**C.    DOCUMENTS CONSIDERED TO BE RELEVANT**

| Category* | Citation of document, with indication, where appropriate, of the relevant passages | Relevant to claim No. |
|---|---|---|
| PX | CN 114566137 A (SUZHOU RUSHENG ELECTRONIC CO., LTD.) 31 May 2022 (2022-05-31)<br>    description, paragraphs [0001]-[0091] | 1-15 |
| X | CN 104471638 A (PANASONIC INTELLECTUAL PROPERTY MANAGEMENT CO., LTD.) 25 March 2015 (2015-03-25)<br>    description, paragraphs [0057]-[0092], [0166]-[0230], and [0598]-[0690] | 9-11, 13 |
| A | CN 111436014 A (ZHUHAI JIELI TECHNOLOGY CO., LTD.) 21 July 2020 (2020-07-21)<br>    entire document | 1-15 |
| A | CN 113428157 A (CHONGQING CHANG'AN AUTOMOBILE CO., LTD.) 24 September 2021 (2021-09-24)<br>    entire document | 1-15 |
| A | US 2005216258 A1 (NIPPON TELEGRAPH & TELEPHONE CORP.) 29 September 2005 (2005-09-29)<br>    entire document | 1-15 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2022** | **22 December 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

International application No.

**PCT/CN2022/132881**

**C.      DOCUMENTS CONSIDERED TO BE RELEVANT**

| Category* | Citation of document, with indication, where appropriate, of the relevant passages | Relevant to claim No. |
|---|---|---|
| A | CN 112037751 A (SHANGHAI NIO AUTOMOBILE CO., LTD.) 04 December 2020 (2020-12-04)<br>    entire document | 1-15 |
| A | CN 103607982 A (SILENTIUM LTD.) 26 February 2014 (2014-02-26)<br>    entire document | 1-15 |
| A | CN 103228485 A (HONDA MOTOR CO., LTD.) 31 July 2013 (2013-07-31)<br>    entire document | 1-15 |

Form PCT/ISA/210 (second sheet) (January 2015)

International application No.

**PCT/CN2022/132881**

| Patent document cited in search report | | | Publication date (day/month/year) | Patent family member(s) | | | Publication date (day/month/year) |
|---|---|---|---|---|---|---|---|
| CN | 114566137 | A | 31 May 2022 | None | | | |
| CN | 104471638 | A | 25 March 2015 | JP | WO2014006846 | A1 | 02 June 2016 |
| | | | | EP | 2869297 | A1 | 06 May 2015 |
| | | | | WO | 2014006846 | A1 | 09 January 2014 |
| | | | | US | 2015063581 | A1 | 05 March 2015 |
| CN | 111436014 | A | 21 July 2020 | None | | | |
| CN | 113428157 | A | 24 September 2021 | None | | | |
| US | 2005216258 | A1 | 29 September 2005 | EP | 1592282 | A1 | 02 November 2005 |
| | | | | DE | 602004006967 | D1 | 26 July 2007 |
| | | | | WO | 2004071130 | A1 | 19 August 2004 |
| | | | | JP | WO2004071130 | A1 | 01 June 2006 |
| CN | 112037751 | A | 04 December 2020 | None | | | |
| CN | 103607982 | A | 26 February 2014 | JP | 2014521987 | A | 28 August 2014 |
| | | | | KR | 20140107109 | A | 04 September 2014 |
| | | | | ES | 2834442 | T3 | 17 June 2021 |
| | | | | EP | 2707871 | A2 | 19 March 2014 |
| | | | | US | 2012288110 | A1 | 15 November 2012 |
| | | | | WO | 2012153294 | A2 | 15 November 2012 |
| CN | 103228485 | A | 31 July 2013 | EP | 2657086 | A1 | 30 October 2013 |
| | | | | US | 2013259249 | A1 | 03 October 2013 |
| | | | | WO | 2012086282 | A1 | 28 June 2012 |
| | | | | JP | WO2012086282 | A1 | 22 May 2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021116833265

**Non-patent literature cited in the description**

- **JU-MAN SONG**. *A Diffusion Strategy for the Multichannel Active Noise Control System in Distributed Network*, 2016

- **KENTA IWAI**. *Multichannel Feedforward Active Noise Control System with Optimal Reference Microphone Selector Based on Time Difference of Arrival*, 2018